# EUROPÄISCHE PATENTSCHRIFT

(11) **EP 1 870 319 B1**
(45) Veröffentlichungstag und Bekanntmachung des Hinweises auf die Patenterteilung: **10.11.2010**
(21) Anmeldenummer: 07010847.7
(22) Anmeldetag: 01.06.2007
(51) Int. Cl.: B62D 25/04, F16B 2/06

(54) **Klemmvorrichtung zum Festlegen eines Gegenstandes an einer Säule eines Fahrzeugs**
Clamping device for clamping an object to a column of a vehicle
Dispositif de serrage destiné à la fixation d'un objet sur une colonne d'un véhicule

(30) Priorität: 19.06.2006 DE 202006009657 U
(43) Veröffentlichungstag der Anmeldung: 26.12.2007
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- WO-A-93/25821
- DE-A1- 2 754 964
- FR-A1- 2 495 090
- US-A- 4 486 935

## Beschreibung

Die Erfindung betrifft eine Klemmvorrichtung gemäß dem Oberbegriff des Patentanspruchs 1.

Aus der Praxis sind Klemmvorrichtungen bekannt, mit denen verschiedene Gegenstände, wie beispielsweise Außenspiegel, Türen, Türschlösser oder andere Sicherheitsvorrichtungen an einer Säule eines Fahrzeugs montierbar sind. Diese Klemmvorrichtungen weisen zwei Spannbacken auf, die gegeneinander spannbar sind und die Säule von einander gegenüberliegenden Seiten erfassen. Durch das Spannen der Spannbacken ergibt sich gleichzeitig eine gewisse Breitenanpassung der Klemmvorrichtung an die Säule. Diese Breitenanpassung erfolgt dabei ausschließlich in Spannrichtung, so daß die Spannbacke bei unterschiedlich dimensionierten bzw. unterschiedlich geformten Säulen keine ausreichend sichere Anlage mehr gewährleistet. Insbesondere weisen diese bekannten Klemmvorrichtungen gegenüber senkrecht zur Spannrichtung wirkenden Kräften keine ausreichende Sicherheit auf.

Aus der US 4,486,935 A ist eine Federspannvorrichtung bekannt. Diese Federspannvorrichtung weist mehrere Spannbacken auf, die stirnseitig an der zu spannenden Feder angreifen.

Aus der WO 93/25821 A ist eine Klemmvorrichtung bekannt, die von einer gezahnten Klemmschiene gebildet ist. Auf dieser Klemmschiene sind Spannbacken verschiebbar gehalten, die eine korrespondierende Verzahnung aufweisen. Diese Spannbacken können mit einem Rohr zur Anlage gebracht werden, um auf diese Weise Teile an einem Rohr festzuklemmen.

Aus der DE 27 54 964 A ist eine gattungsgemäße Vorrichtung für eine lösbare Halterung von Apparaten an feststehenden Einrichtungen bekannt. Diese Vorrichtung weist Spannbacken auf, die ein Rohr zwischen sich aufnehmen. Das Rohr wird dabei von vier Spannbacken erfaßt.

Der Erfindung liegt die Aufgabe zugrunde, eine Klemmvorrichtung der eingangs genannten Art zu schaffen, die für unterschiedlich dimensionierte sowie unterschiedlich geformte Säulen eines Fahrzeugs geeignet ist und jeweils einen sicheren Halt an der Säule des Fahrzeugs bietet.

Diese Aufgabe wird erfindungsgemäß mit den Merkmalen des Patentanspruchs 1 gelöst.

Die Klemmvorrichtung gemäß Anspruch 1 dient zum Festlegen eines Gegenstandes an einer Säule eines Fahrzeugs, wobei die Säule insbesondere ein Fahrzeugdach stützt. Es spielt dabei keine Rolle, ob es sich um eine vordere oder hintere Säule des Fahrzeugs handelt. Bei größeren Fahrzeugen, in denen mehrere Personen hintereinander sitzen, kommen auch mittlere Säulen zum Befestigen von Gegenständen in Frage.

Mindestens zwei der Spannbacken weisen Führungsflächen auf. An diesen Führungsflächen stützen sich die Spannbakken gegenseitig ab, so daß die Spannbacken beim Spannen mittels der Spannmittel gegeneinander geführt sind. Dabei befinden sich die Spannmittel zwischen der Säule und den Führungsflächen, so daß die Führungsflächen auf diese Weise ein Aufspreizen der Spannbacken beim Spannen verhindern. Die Spannbacken liegen daher beim Spannvorgang sauber an der Säule an, so daß auf diese Weise ein sicherer Halt der Spannbacken an der Säule gewährleistet ist.

Um zu erreichen, daß die Klemmvorrichtung an unterschiedlich geformte sowie unterschiedlich dimensionierte Säulen anpaßbar ist, besteht diese gemäß Anspruch 2 aus mindestens drei gegeneinander verschiebbare Spannbacken. Damit ist eine Anpassung der Klemmvorrichtung in wenigstens zwei Dimensionen möglich, so daß die Klemmvorrichtung stets eine gute Klemmwirkung in allen Raumrichtungen ergibt. Wenigstens zwei der Spannbacken sind durch Spannmittel gegeneinander verspannbar, so daß diese Spannbakken die gewünschte Klemmkraft auf die Säulen ausüben können. Die von den Spannmitteln erfaßten Spannbacken sind durch die Spannmittel in Anlage mit der Säule bringbar, so daß die Spannbacken mit der Säule einen festen Verbund ergeben.

Vorzugsweise erstrecken sich die Führungsflächen gemäß Anspruch 3 in etwa parallel zur Spannrichtung der Spannbacken. Auf diese Weise ergibt sich eine exakte Führung der Spannbacken, so daß jegliches von der Säule weg gerichtetes Verkippen der Spannbacken zuverlässig unterbunden ist.

Gemäß Anspruch 4 ist es günstig, wenn mindestens eine der Spannbacken die Säule an mindestens zwei winkelig aufeinander stoßenden Flächen erfaßt. Auf diese Weise ergibt sich eine Arretierung der Spannbacke in zwei unterschiedlichen Richtungen, so daß die Spannbacke sehr fest an der Säule gehalten ist. Insbesondere ist es auf diese Weise sehr einfach möglich, eine große Zahl von Flächen der Säule durch die einzelnen Spannbacken zu erfassen.

Für die Spannmittel haben sich gemäß Anspruch 5 Klemmschrauben bewährt, wobei grundsätzlich pro Verbindung eine Klemmschraube ausreichend ist. In besonderen Fällen, wie beispielsweise beim Festlegen schwerer Gegenstände an der Säule, können auch mehrere Spannschrauben zum gegenseitigen Spannen zweier Spannbacken eingesetzt werden. Vorzugsweise wirken die Spannschrauben mit Federringen zusammen, um trotz Materialermüdung im Laufe der Betriebsdauer des Fahrzeuges eine sichere und vor allem gleichbleibende Klemmwirkung der Klemmvorrichtung sicherzustellen. Die Achse der Spannschraube schließt dabei mit der Spannrichtung der erfaßten Spannbacken einen Winkel zwischen -45° und +45° ein, um eine ausreichende Spannwirkung auf die Spannbacken zu erzielen. Vorzugsweise ist die Klemmschraube parallel zur Spannrichtung der Spannbacken ausgerichtet.

Zur einfachen Festlegung der Klemmschrauben an den Spannbacken weisen letztere gemäß Anspruch 6 von der Säule weg gerichtete Flansche auf. In diesen sind fluchtende Bohrungen vorgesehen, die von der Klemmschraube durchdrungen sind. Diese Anordnung erleichtert insbesondere den Zugang zu den Klemmschrauben, so daß die Klemmvorrichtung sehr einfach an der Säule montiert werden kann.

Ist eine der Bohrungen gemäß Anspruch 7 als Gewindebohrung ausgebildet, so kann auf den Einsatz einer zusätzlichen Mutter verzichtet werden, wodurch sich insbesondere die Montage der Klemmvorrichtung weiter vereinfacht. Alternativ oder zusätzlich ist es gemäß Anspruch 8 vorteilhaft, wenn mindestens eine der Bohrungen ein Langloch ist. Damit lassen sich die von der Schraube durchsetzten Spannbacken sehr einfach senkrecht zur Längserstreckung der Klemmschraube gegeneinander verschieben. Dies erlaubt eine zusätzliche und einfache Anpassung der Klemmvorrichtung an unterschiedliche Säulen.

Gemäß Anspruch 9 ist es günstig, wenn mindestens zwei der Spannbacken miteinander zusammenwirkende Verzahnungen aufweisen. Diese liegen vorzugsweise flächig aufeinander, so daß auf diese Weise eine gute Arretierung der Spannbacken aneinander erfolgt.

Schließlich ist es gemäß Anspruch 10 vorteilhaft, wenn mindestens eine der Spannbacken säulenseitig elastisch ausgebildet ist. Auf diese Weise ergibt sich eine besonders gute Anpassung der Spannbacke an die Form der Säule, was sich vorteilhaft auf die Klemmwirkung der Klemmvorrichtung auswirkt.

Der Erfindungsgegenstand wird beispielhaft anhand der Zeichnung erläutert, ohne den Schutzumfang zu beschränken.

Es zeigt:
- Figur 1: eine räumliche Darstellung einer ersten Ausfüh- rungsform einer Klemmvorrichtung an einer Säule eines Fahrzeugs,
- Figur 2: eine Schnittdarstellung durch die Vorrichtung gemäß Figur 1 entlang der Schnittlinie II-II,
- Figur 3: eine räumliche Darstellung einer alternativen Ausführungsform einer Klemmvorrichtung und
- Figur 4: eine Schnittdarstellung durch die Vorrichtung gemäß Figur 3 entlang der Schnittlinie IV-IV.

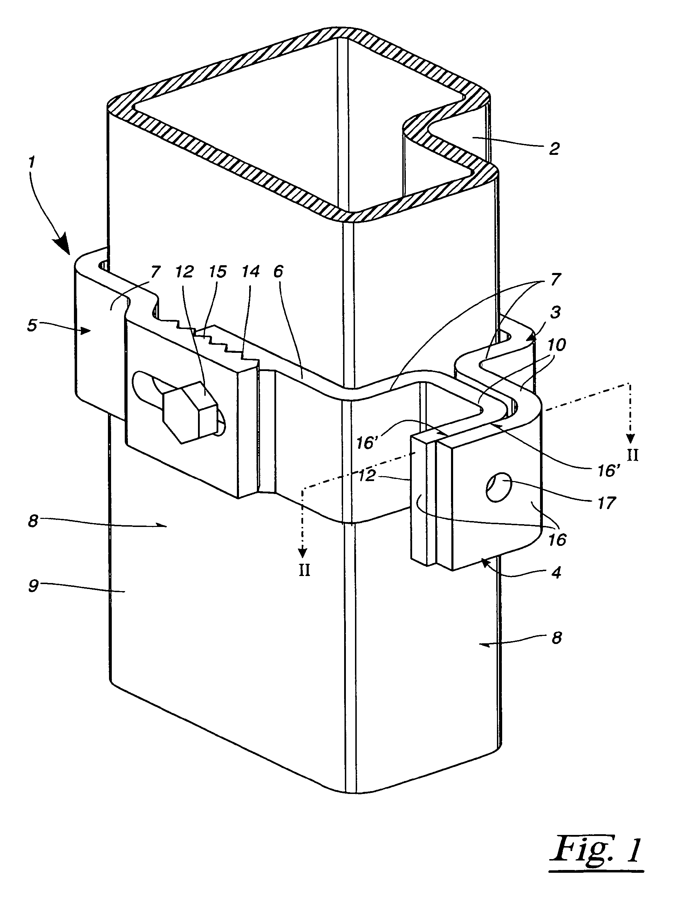

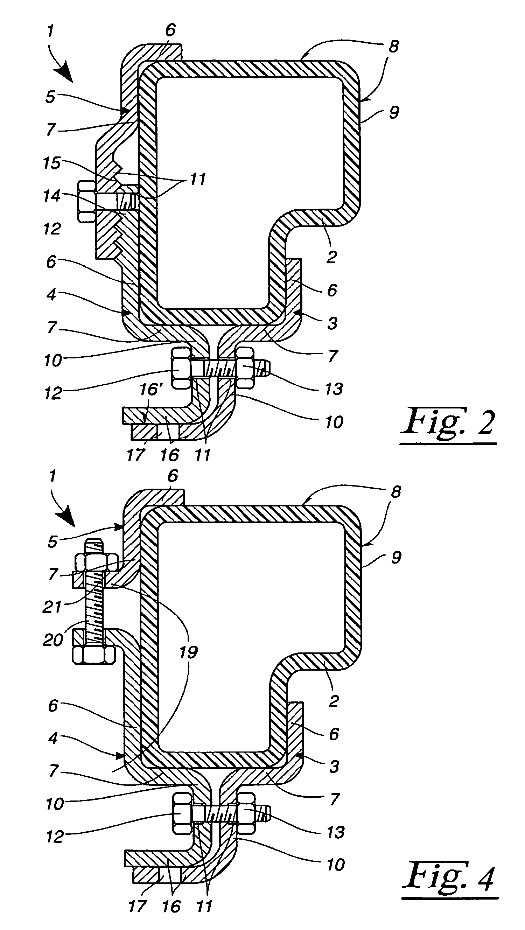

Die Figuren 1 und 2 zeigen eine Klemmvorrichtung 1 für eine Säule 2 eines Fahrzeugs. Die Klemmvorrichtung 1 besteht aus drei Spannbacken 3, 4, 5, die die Säule 2 umfassen. Die Spannbacken 3, 4, 5 weisen dabei Schenkel 6, 7 auf, die jeweils an winkelig aneinander stoßenden Flächen 8 einer Außenkontur 9 der Säule 2 anliegen.

An den Schenkeln 7 der Spannbacken 3, 4 sind Flansche 10 angeformt, welche zueinander fluchtende Durchgangsbohrungen 11 aufweisen. Diese Durchgangsbohrungen 11 sind von einer Klemmschraube 12 durchsetzt, welche mit einer Mutter 13 zusammenwirkt. Durch Festziehen der Mutter 13 gegen die Klemmschraube 12 werden die beiden Spannbacken 3, 4 gegeneinander gezogen, so daß die Schenkel 6 beider Spannbacken 3, 4 flächig und fest an der Außenkontur 9 der Säule 2 anliegen. Zur Anpassung an unterschiedlich dimensionierte bzw. unterschiedlich geformte Säulen 2 muß lediglich die Schraube 12 gegenüber der Mutter 13 entsprechend eingestellt werden. Gegebenenfalls kann die Schraube 12 auch durch eine längere oder kürzere Schraube ersetzt werden.

Der Schenkel 6 der Spannbacke 4 weist außenseitig eine Zahnprofilierung 14 auf, die mit einer entsprechend geformten Zahnprofilierung 15 des Schenkels 7 der Spannbakke 5 zusammenwirkt. Auf diese Weise wird eine Verstellbarkeit der Spannbacken 4, 5 gegeneinander realisiert, wobei diese trotzdem fest miteinander verbunden werden können. Die Zahnprofilierungen 14, 15 werden durch eine weitere Klemmschraube 12 gegeneinander vorgespannt, um die Spannbacken 4, 5 fest aneinander zu halten. Diese Zahnprofilerungen 14, 15 dienen insbesondere der Einstellung der Spannbacken 4, 5 zur Anpassung an unterschiedlich geformte bzw. unterschiedlich dimensionierte Säulen 2.

Die Spannbacken 3, 4 weisen Führungsflansche 16 auf, welche an die Flansche 10 angeformt sind. Die Führungsflansche 16 liegen mittels Führungsflächen 16' gegeneinander an. Die Führungsflächen 16' sind dabei parallel zur Klemmschraube 12 ausgerichtet. Dies stellt sicher, daß die Führungsflächen 16' während des gesamten Spannvorgangs flächig aneinander zur Anlage kommen. Die Anlage der Führungsflansche 16 mit ihren Führungsflächen 16' stellt sicher, daß die Spannbacken 3, 4 nicht beim Spannen aufspreizen und sich dadurch von der Säule 2 lösen können. Die von der Klemmschraube 12 hervorgerufene Spannkraft übt zwar zusammen mit der Anlagekraft des Schenkels 6 der Spannbacken 3, 4 an der Säule 2 ein Drehmoment auf die Spannbacken 3, 4 aus, dieses Drehmoment wird jedoch von den Führungsflanschen 16 der Spannbacken 3, 4 abgestützt. Auf diese Weise ist ein sicherer Halt der Spannbacken 3, 4 an der Säule 2 gewährleistet.

Die Führungsflansche 16 weisen Durchgangsbohrungen 17 auf, die zum Durchgreifen einer nicht dargestellten Schraube bestimmt sind, um einen Gegenstand an der Klemmvorrichtung 1 zu halten.

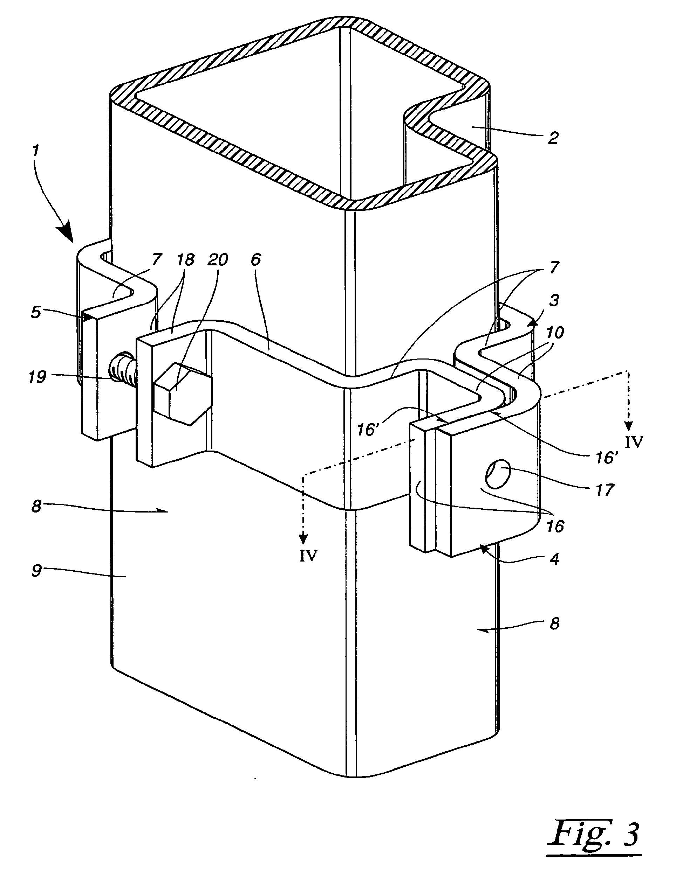

Die Figuren 3 und 4 zeigen eine alternative Ausführungsform der Klemmvorrichtung 1 gemäß den Figuren 1 und 2. Dabei bedeuten gleiche Bezugszeichen gleiche Teile, wobei im folgenden nur auf die Unterschiede zur Ausführungsform gemäß den Figuren 1 und 2 eingegangen wird.

Die Spannbacken 4, 5 weisen zusätzliche Flansche 18 auf, die von zueinander fluchtenden Durchgangsbohrungen 19 durchsetzt sind. Diese Durchgangsbohrungen 19 sind von einer weiteren Klemmschraube 20 durchsetzt, welche mit einer weiteren Mutter 21 zusammenwirkt. Durch diese geänderte Ausführungsform wird erreicht, daß die Spannbacken 4, 5 mit der Zugkraft der Klemmschraube 20 gegeneinander gespannt werden können, wodurch sich die Haltekraft der Klemmvorrichtung 1 an der Säule 2 entsprechend verbessert.

### Bezugszeichenliste

- 1: Klemmvorrichtung
- 2: Säule
- 3, 4, 5: Spannbacke
- 6, 7: Schenkel
- 8: Fläche
- 9: Außenkontur
- 10: Flansch
- 11: Durchgangsbohrung
- 12: Klemmschraube
- 13: Mutter
- 14, 15: Zahnprofilierung
- 16: Führungsflansch
- 16': Führungsfläche
- 17: Durchgangsbohrung
- 18: Flansch
- 19: Durchgangsbohrung
- 20: Klemmschraube
- 21: Mutter

## Patentansprüche

1. Klemmvorrichtung zum Festlegen eines Gegenstandes an einer Säule (2) eines Fahrzeuges, die insbesondere ein Fahrzeugdach stützt, wobei die Klemmvorrichtung (1) gegeneinander verschiebbare Spannbacken (3, 4, 5) aufweist, die gegeneinander durch Spannmittel in Form von Klemmschrauben (12, 20) verspannbar und in Anlage mit der Säule (2) bringbar sind, **dadurch gekennzeichnet, daß** mindestens zwei der Spannbacken (3, 4, 5) Führungsflächen (16') aufweisen, an denen sich die Spannbacken (3, 4, 5) gegenseitig abstützen, wobei die Klemmschrauben (12) zwischen der Säule (2) und den Führungsflächen (16') vorgesehen sind, um ein Aufspreizen der Spannbacken (3, 4, 5) beim Spannen derselben zu verhindern.

2. Klemmvorrichtung nach Anspruch 1, **dadurch gekennzeichnet, daß** die Klemmvorrichtung (1) wenigstens drei der gegeneinander verschiebbaren und in Anlage mit der Säule (2) bringbare Spannbacken (3, 4, 5) aufweist.

3. Klemmvorrichtung nach Anspruch 1 oder 2, **dadurch gekennzeichnet, daß** sich die Führungsflächen (16') in etwa parallel zur Spannrichtung der Klemmschrauben (12) erstrecken).

4. Klemmvorrichtung nach mindestens einem der Ansprüche 1 bis 3, **dadurch gekennzeichnet, daß** die Säule (2) eine von mehreren, winkelig aufeinander stoßenden Flächen (8) gebildete Außenkontur (9) aufweist, **dadurch gekennzeichnet, daß** mindestens eine der Spannbacken (3, 4, 5) die Säule (2) an mindestens zwei der Flächen (8) erfassen kann.

5. Klemmvorrichtung nach mindestens einem der Ansprüche 1 bis 4, **dadurch gekennzeichnet, daß** die Klemmschraube (12, 20) eine Achse aufweist, die mit der Spannrichtung der von ihr erfaßten Spannbacken (3, 4, 5) vorzugsweise einen Winkel zwischen -45° und +45°, insbesondere um 0° einschließt.

6. Klemmvorrichtung nach Anspruch 5, **dadurch gekennzeichnet, daß** die Spannbacken (3, 4, 5) von der Säule (2) weggerichtete Flansche (10, 18) aufweisen, die fluchtende Bohrungen (11, 19) aufweisen, welche von der Klemmschraube (12, 20) durchdrungen sind.

7. Klemmvorrichtung nach Anspruch 6, **dadurch gekennzeichnet, daß** mindestens eine der Bohrungen (11, 19) eine Gewindebohrung ist.

8. Klemmvorrichtung nach Anspruch 6 oder 7, **dadurch gekennzeichnet, daß** mindestens eine der Bohrungen (11, 19) ein Langloch ist.

9. Klemmvorrichtung nach mindestens einem der Ansprüche 1 bis 8, **dadurch gekennzeichnet, daß** mindestens zwei der Spannbacken (3, 4, 5) miteinander zusammenwirkende Verzahnungen (14, 15) aufweisen, die vorzugsweise flächig aneinander liegen.

10. Klemmvorrichtung nach mindestens einem der Ansprüche 1 bis 9, **dadurch gekennzeichnet, daß** mindestens eine der Spannbacken (3, 4, 5) säulenseitig elastisch ausgebildet ist, um eine Anpassung der Form der Spannbacke (3, 4, 5) an die Außenkontur (9) der Säule (2) zu erzielen.

## Claims

1. Clamping device for fixing an object to a pillar (2) of a vehicle, which pillar in particular supports a vehicle roof, with the clamping device (1) having clamping jaws (3, 4, 5) which are movable relative to one another and which can, by clamping means in the form of clamping screws (12, 20), be braced against one another and placed in contact with the pillar (2), **characterized in that** at least two of the clamping jaws (3, 4, 5) have guide surfaces (16') at which the clamping jaws (3, 4, 5) are supported against one another, with the clamping screws (12) being provided between the pillar (2) and the guide surfaces (16') in order to prevent the clamping jaws (3, 4, 5) spreading apart as they are clamped.

2. Clamping device according to Claim 1, **characterized in that** the clamping device (1) has at least three of the clamping jaws (3, 4, 5) which are movable relative to one another and which can be placed in contact with the pillar (2).

3. Clamping device according to Claim 1 or 2, **characterized in that** the guide surfaces (16') extend approximately parallel to the clamping direction of the clamping screws (12).

4. Clamping device according to at least one of Claims 1 to 3, **characterized in that** the pillar (2) has an outer contour (9) formed by a plurality of surfaces (8) which butt against one another at angles, **characterized in that** at least one of the clamping jaws (3, 4, 5) can engage around at least two of the surfaces (8) of the pillar (2).

5. Clamping device according to at least one of Claims 1 to 4, **characterized in that** the clamping screw (12, 20) has an axis which encloses an angle of between -45° and +45°, in particular 0°, with the clamping direction of the clamping jaws (3, 4, 5) through which it engages.

6. Clamping device according to Claim 5, **characterized in that** the clamping jaws (3, 4, 5) have flanges (10, 18) which are directed away from the pillar (2) and which have aligned bores (11, 19) through which the clamping screw (12, 20) extends.

7. Clamping device according to Claim 6, **characterized in that** at least one of the bores (11, 19) is a threaded bore.

8. Clamping device according to Claim 6 or 7, **characterized in that** at least one of the bores (11, 19) is a slot.

9. Clamping device according to at least one of Claims 1 to 8, **characterized in that** at least two of the clamping jaws (3, 4, 5) have toothings (14, 15) which interact with one another and which preferably bear areally against one another.

10. Clamping device according to at least one of Claims 1 to 9, **characterized in that** at least one of the clamping jaws (3, 4, 5) is of elastic design at the pillar side in order to obtain an adaptation of the shape of the clamping jaw (3, 4, 5) to the outer contour (9) of the pillar (2).

## Revendications

1. Dispositif de serrage pour fixer un objet sur une colonne (2) d'un véhicule, qui supporte notamment un toit de véhicule, le dispositif de serrage (1) présentant des mâchoires de serrage (3, 4, 5) déplaçables les unes par rapport aux autres, qui peuvent être serrées les unes contre les autres par des moyens de serrage en forme de vis de serrage (12, 20) et qui peuvent être amenées en appui avec la colonne (2), **caractérisé en ce qu'**au moins deux des mâchoires de serrage (3, 4, 5) présentent des surfaces de guidage (16') sur lesquelles s'appuient mutuellement les mâchoires de serrage (3, 4, 5), les vis de serrage (12) étant prévues entre la colonne (2) et les surfaces de guidage (16'), afin d'empêcher un écartement des mâchoires de serrage (3, 4, 5) lors de leur serrage.

2. Dispositif de serrage selon la revendication 1, **caractérisé en ce que** le dispositif de serrage (1) présente au moins trois des mâchoires de serrage (3, 4, 5) pouvant être déplacées les unes contre les autres et pouvant être amenées en appui avec la colonne (2).

3. Dispositif de serrage selon la revendication 1 ou 2, **caractérisé en ce que** les surfaces de guidage (16') s'étendent approximativement parallèlement à la direction de serrage des vis de serrage (12).

4. Dispositif de serrage selon au moins l'une quelconque des revendications 1 à 3, **caractérisé en ce que** la colonne (2) présente un contour extérieur (9) formée par plusieurs surfaces (8) en butée les unes contre les autres de manière angulaire, **caractérisé en ce qu'**au moins l'une des mâchoires de serrage (3, 4, 5) peut saisir la colonne (2) au niveau d'au moins deux des surfaces (8).

5. Dispositif de serrage selon au moins l'une quelconque des revendications 1 à 4, **caractérisé en ce que** la vis de serrage (12, 20) présente un axe qui forme avec la direction de serrage des mâchoires de serrage (3, 4, 5) saisies par elle, de préférence un angle compris entre -45° et +45°, notamment de 0°.

6. Dispositif de serrage selon la revendication 5, **caractérisé en ce que** les mâchoires de serrage (3, 4, 5) présentent des brides (10, 18) orientées à l'écart de la colonne (2), qui présentent des alésages en affleurement (11, 19) à travers lesquels passent la vis de serrage (12, 20).

7. Dispositif de serrage selon la revendication 6, **caractérisé en ce qu'**au moins l'un des alésages (11, 19) est un alésage fileté.

8. Dispositif de serrage selon la revendication 6 ou 7, **caractérisé en ce qu'**au moins l'un des alésages (11, 19) est un trou oblong.

9. Dispositif de serrage selon au moins l'une quelconque des revendications 1 à 8, **caractérisé en ce qu'**au moins deux des mâchoires de serrage (3, 4, 5) présentent des dentures (14, 15) coopérant l'une avec l'autre, qui s'appliquent de préférence à plat l'une contre l'autre.

10. Dispositif de serrage selon au moins l'une quelconque des revendications 1 à 9, **caractérisé en ce qu'**au moins l'une des mâchoires de serrage (3, 4, 5) est réalisée du côté de la colonne de manière élastique, afin de permettre à la forme de la mâchoire de serrage (3, 4, 5) de s'adapter au contour extérieur (9) de la colonne (2).
